(19) Europäisches Patentamt / European Patent Office / Office européen des brevets

(11) **EP 3 237 347 B1**

(12) **FASCICULE DE BREVET EUROPEEN**

(45) Date de publication et mention
de la délivrance du brevet:
**20.02.2019  Bulletin 2019/08**

(51) Int Cl.:
***C03C 17/22*** *(2006.01)*    ***C03C 17/36*** *(2006.01)*

(21) Numéro de dépôt: **15825618.0**

(22) Date de dépôt: **22.12.2015**

(86) Numéro de dépôt international:
**PCT/FR2015/053727**

(87) Numéro de publication internationale:
**WO 2016/102892 (30.06.2016 Gazette 2016/26)**

(54) **VITRAGE COMPRENANT UNE COUCHE DE PROTECTION SUPÉRIEURE A BASE DE CARBONE HYDROGÈNE**

VERGLASUNG MIT EINER OBEREN, AUS HYDRIERTEM KOHLENSTOFF HERGESTELLTEN SCHUTZSCHICHT

GLAZING COMPRISING A PROTECTIVE UPPER LAYER MADE FROM HYDROGENATED CARBON

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **23.12.2014  FR 1463247**

(43) Date de publication de la demande:
**01.11.2017  Bulletin 2017/44**

(73) Titulaire: **Saint-Gobain Glass France
92400 Courbevoie (FR)**

(72) Inventeur: **BROSSARD, Sophie
Minneapolis, Minnesota 55419 (US)**

(74) Mandataire: **Saint-Gobain Recherche
Département Propriété Industrielle
39 Quai Lucien Lefranc
93300 Aubervilliers (FR)**

(56) Documents cités:
EP-A1- 2 568 059        WO-A1-2008/130735
WO-A1-2010/139908     US-A1- 2003 143 401

• CHEN T L ET AL: "Paper;Graphene as an anti-permeation and protective layer for indium-free transparent electrodes;Graphene as an anti-permeation and protective layer for indium-free transparent electrodes", NANOTECHNOLOGY, IOP, BRISTOL, GB, vol. 23, no. 39, 12 septembre 2012 (2012-09-12), page 395603, XP020230097, ISSN: 0957-4484, DOI: 10.1088/0957-4484/23/39/395603
• Yuda Zhao ET AL: "Electronic Supplementary Information for Highly Impermeable and Transparent Graphene as Ultra-Thin Protection Barrier of Ag thin Films", , 20 juin 2013 (2013-06-20), XP055223864, Extrait de l'Internet: URL:http://www.rsc.org/suppdata/tc/c3/c3tc 30743c/c3tc30743c.pdf [extrait le 2015-10-27]

EP 3 237 347 B1

**Description**

L'invention concerne un matériau et un procédé d'obtention d'un matériau, tel qu'un vitrage, comprenant un substrat transparent revêtu d'un empilement de couches minces agissant sur le rayonnement infrarouge comprenant au moins une couche fonctionnelle.

Les matériaux comprenant des empilements agissant sur le rayonnement infrarouge sont utilisés dans des vitrages dits « de contrôle solaire » visant à diminuer la quantité d'énergie solaire entrante et/ou dans des vitrages dits « bas émissifs » visant à diminuer la quantité d'énergie dissipée vers l'extérieur d'un bâtiment ou d'un véhicule.

Les couches fonctionnelles sont déposées entre des revêtements à base de matériaux diélectriques qui comprennent généralement plusieurs couches diélectriques permettant d'ajuster les propriétés optiques de l'empilement.

La résistance mécanique de ces empilements complexes est souvent insuffisante et cela, a fortiori, lorsque les couches fonctionnelles sont des couches métalliques à base d'argent (ou couches d'argent). Cette faible résistance se traduit par l'apparition à court terme de défauts tels que des rayures, voire de l'arrachement total ou partiel de l'empilement lors de son utilisation dans des conditions normales. Tous défauts ou rayures sont susceptibles d'altérer non seulement l'esthétique du substrat revêtu mais également ses performances optiques et énergétiques.

Des couches supérieures de protection sont classiquement utilisées à diverses fins, notamment pour améliorer la résistance aux rayures, la résistance à la corrosion humide et la résistance aux traitements thermiques à température élevée.

Dans le cas des vitrages « contrôle solaire » ou « bas émissifs », on cherche en général à ne pas augmenter significativement l'absorption dans le visible. Cette contrainte doit être prise en compte dans le choix des matériaux constituant l'empilement et notamment des couches supérieures de protection.

On connait par exemple des couches supérieures de protection à base d'oxyde de titane ou d'oxyde mixte de zinc et d'étain. Ces couches supérieures de protection sont peu absorbantes. Cependant, les substrats revêtus de telles couches ne présentent pas une résistance aux rayures suffisante.

Il est également connu d'utiliser des couches de carbone sous forme graphite ou amorphe pour améliorer la résistance aux rayures.

Les couches de carbone amorphe dites DLC (« Diamond-Like-Carbon ») comprennent des atomes de carbone dans un mélange d'état d'hybridation sp2 et sp3. De telles couches ne sont pas déposables par un procédé magnétron classique. Elles sont en général obtenues par dépôt chimique en phase vapeur assisté par un plasma (PECVD), par ablation laser, par pulvérisation par arc ou par dépôt par faisceau d'ion.

Le document US2003/0143401 divulgue un vitrage comprenant une couche temporaire de protection supérieure de carbone.

Les couches de carbone dites « graphite » comprennent des atomes de carbone essentiellement dans un état d'hybridation sp2. De telles couches augmentent considérablement l'absorption dans le visible et l'infrarouge du matériau les comprenant. Par conséquent, ces couches sont utilisées soit comme couche de protection temporaire, soit à de faibles épaisseurs de l'ordre d'un nanomètre.

Lorsque les couches de carbone graphite sont utilisées comme couche de protection temporaire, elles peuvent être éliminées lors d'un traitement thermique, par oxydation en dioxyde de carbone. L'absorption résiduelle après traitement thermique est minime.

Lorsque les couches de carbone graphite sont utilisées à des épaisseurs de l'ordre d'un nanomètre, l'amélioration de la résistance aux rayures peut être insuffisante.

Il existe un besoin d'améliorer la résistance aux rayures des substrats revêtus d'empilement agissant sur le rayonnement infrarouge sans modifier les propriétés optiques telles que l'absorption dans le visible.

Le demandeur a découvert de manière surprenante que l'utilisation comme couche de protection supérieure d'une couche de carbone hydrogéné au sein de laquelle les atomes de carbone formant les liaisons carbone-carbone et carbone-hydrogène sont essentiellement dans un état d'hybridation sp2 permet d'améliorer considérablement la résistance aux rayures sans modifier les propriétés d'absorption et ce, même lorsque l'épaisseur de la couche de carbone hydrogéné est supérieure à 10 nm.

L'invention concerne un matériau comprenant un substrat transparent revêtu d'un empilement agissant sur le rayonnement infrarouge comprenant :

-    au moins une couche fonctionnelle et
-    au moins une couche de protection supérieure déposée au-dessus d'au moins une partie de la couche fonctionnelle,

caractérisé en ce que la couche de protection supérieure est une couche de carbone hydrogéné au sein de laquelle les atomes de carbone forment des liaisons carbone-carbone et carbone-hydrogène et sont essentiellement dans un état d'hybridation sp2.

La couche de carbone obtenue selon ce procédé comprend des atomes de carbone formant des liaisons carbone-carbone et carbone-hydrogène essentiellement dans un état d'hybridation sp2.

La couche de carbone hydrogéné comprend du carbone et de l'hydrogène. Ces éléments sont liés entre eux par des liaisons carbone-carbone et carbone-hydrogène. Selon l'invention, les atomes de carbone de la couche de carbone hydrogéné formant les liaisons carbone-carbone et carbone-hydrogène sont essentiellement dans un état d'hybridation sp2. On considère que les atomes de carbone de la couche sont essentiellement dans un état d'hybridation sp2 quand au moins 80 %, au moins 90 %, voire au moins 100 % des atomes de carbone sont dans un état d'hybridation sp2. L'hybridation des atomes de carbone peut-être caractérisée par spectroscopie infrarouge à transformée de Fourier (FTIR).

La couche de carbone selon l'invention diffère de par cette caractéristique des couches dites DLC qui sont des couches de carbone amorphe éventuellement hydrogéné comprenant des atomes de carbone dans un mélange d'état d'hybridation sp2 et sp3, de préférence essentiellement sp3. Les atomes de carbone formant les liaisons carbone-carbone et carbone-hydrogène ne sont pas essentiellement dans un état d'hybridation sp2.

La couche de protection à base de carbone hydrogéné selon l'invention peut être obtenue par pulvérisation cathodique assistée par champ magnétique, par exemple à l'aide d'une cible de graphite. L'atmosphère dans l'enceinte de dépôt comprend un gaz neutre, de préférence de l'argon, et un hydrocarbure. L'hydrocarbure peut être choisi parmi le méthane ou l'acétylène.

Les quantités d'hydrogène présent dans une couche de carbone hydrogéné peuvent être mesurées par une analyse de détection de recul élastique dite ERDA (« Elastic Recoil Détection Analysis »). Cette méthode permet de déterminer les quantités d'hydrogène présent par unité de surface analysée. Les résultats obtenus correspondent au nombre d'atomes d'hydrogène par $cm^2$.

On considère selon l'invention qu'une couche de carbone est hydrogéné lorsqu'elle comprend au moins 10 % d'atomes d'hydrogène par rapport au nombre total d'atomes de carbone et d'hydrogène dans la couche de carbone hydrogéné.

Selon des modes de réalisation avantageux, la couche de carbone hydrogéné selon l'invention présente par ordre de préférence croissant, au moins 20 %, au moins 25 %, au moins 30 % d'atomes d'hydrogène par rapport au nombre total d'atomes de carbone et d'hydrogène dans la couche de carbone hydrogéné.

D'autres méthodes d'analyse spectroscopique peuvent être utilisées pour montrer que la couche de carbone est hydrogénée et pour quantifier les quantités d'hydrogène tel que la spectroscopie dites FRES (« Forward Recoil Elastic Scattering »).

Il est possible de faire varier les quantités d'hydrogène dans la couche de carbone hydrogéné en adaptant les proportions d'hydrocarbure dans l'atmosphère de l'enceinte de dépôt. Par exemple, une atmosphère comprenant de l'argon et 5 % en volume de méthane ou d'acéthylène par rapport au volume d'argon, permet d'obtenir une couche de carbone hydrogéné comprenant au moins 20 % d'atomes d'hydrogène par rapport au nombre total d'atomes de carbone et d'hydrogène dans la couche de carbone hydrogéné. Une atmosphère comprenant de l'argon et 10 % en volume de méthane par rapport au volume d'argon, permet d'obtenir une couche de carbone hydrogéné comprenant au moins 30 % d'atomes d'hydrogène par rapport au nombre total d'atomes de carbone et d'hydrogène dans la couche de carbone hydrogéné.

Une couche de carbone non hydrogéné, c'est-à-dire qui n'est pas obtenue en ajoutant volontairement un hydrocarbure dans l'atmosphère de dépôt comprend tout de même des atomes d'hydrogène en surface. Par mesure de comparaison, une couche de carbone non hydrogéné comprend moins de 10 % d'atomes d'hydrogène par rapport au nombre total d'atomes de carbone et d'hydrogène mesuré par ERDA.

La couche de protection supérieure a une épaisseur :

- supérieure ou égale à 1 nm, supérieure ou égale à 5 nm, supérieure ou égale à 7 nm, ou supérieure ou égale à 10 nm, et/ou
- inférieure ou égale à 50 nm, inférieure ou égale à 30 nm ou inférieure ou égale à 20 nm.

Selon un mode de réalisation du matériau selon l'invention, la couche de carbone hydrogéné a une épaisseur d'au moins 1 nm et comprend au moins 34 % d'atomes d'hydrogène par rapport au nombre total d'atomes de carbone et d'hydrogène.

Selon un autre mode de réalisation du matériau selon l'invention, la couche de carbone hydrogéné a une épaisseur supérieure ou égale à 10 nm et comprend au moins 27 % d'atomes d'hydrogène par rapport au nombre total d'atomes de carbone et d'hydrogène.

La couche de carbone hydrogéné présente de préférence un indice de réfraction inférieur à 2,0 ou inférieur à 1,8 mesuré à la longueur d'onde de 550 nm.

Les couches de carbone hydrogéné sont beaucoup moins absorbantes que les couches de carbone non hydrogéné. Ces couches de carbone hydrogéné ne doivent pas être nécessairement éliminées par traitement thermique et peuvent présenter des épaisseurs plus importantes. En effet, les couches de carbone hydrogéné ne modifient pas significativement l'absorption du matériau même lorsqu'elles présentent des épaisseurs supérieures à 10 nm. Ces couches supérieures de protection épaisses apportent une amélioration très significative de la résistance à la rayure par rapport à des couches de protection classiques fines permanentes, c'est-à-dire non destinées à être éliminées, à base de dioxyde de titane (TiO$_2$), d'oxyde mixte de zinc et d'étain (SnZnOx) ou de carbone graphite non hydrogéné.

Il existe une synergie liée à l'utilisation d'une couche de carbone à la fois épaisse, notamment de l'ordre de 10 nm, et hydrogéné. Cette synergie se traduit par l'obtention d'une meilleure résistance aux rayures que celle obtenue avec une couche de carbone hydrogéné fine ou une couche de carbone non hydrogéné épaisse.

La variation de l'absorption lumineuse dans le visible Δabs induite par la couche de protection supérieure est inférieure à 10 %, de préférence inférieure à 5 % et mieux inférieure à 2 %. La variation est obtenue en mesurant l'absorption lumineuse d'un substrat revêtu d'un empilement ne comprenant pas de couche de protection supérieure (Abs. réf) et d'un même substrat revêtu comprenant la couche de protection supérieure (Abs Inv) puis en réalisant le calcul suivant : ΔAbs = (Abs réf-Abs Inv).

Les matériaux selon l'invention peuvent, lorsque les applications le requièrent, présenter dans le visible, une transmission lumineuse élevée et une absorption lumineuse faible. Pour ces applications, l'absorption lumineuse dans le visible du matériau peut être inférieure à 15 %, de préférence inférieure à 10 % et mieux inférieure à 8 %.

Toutes les caractéristiques lumineuses présentées dans la présente description sont obtenues selon les principes et méthodes décrits dans la norme européenne EN 410 se rapportant à la détermination des caractéristiques lumineuses et solaires des vitrages utilisés dans le verre pour la construction. Par Abs., on entend au sens de la présente description l'absorption à incidence normale, sous l'illuminant D65 avec un champ de vision de 2°.

L'utilisation d'une couche de protection supérieure présentant à la fois un taux d'hydrogénation élevé et une épaisseur importante conduit à d'excellentes propriétés de résistance aux rayures tout en maintenant l'absorption dans le visible faible.

L'empilement est déposé par pulvérisation cathodique assistée par un champ magnétique (procédé magnétron). Selon ce mode de réalisation avantageux, toutes les couches de l'empilement sont déposées par pulvérisation cathodique assistée par un champ magnétique.

Sauf mention contraire, les épaisseurs évoquées dans le présent document sont des épaisseurs physiques et les couches sont des couches minces. On entend par couche mince, une couche présentant une épaisseur comprise entre 0,1 nm et 100 micromètres.

Dans toute la description le substrat selon l'invention est considéré posé horizontalement. L'empilement de couches minces est déposé au-dessus du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une ou plusieurs couches intercalées entre ces deux couches.

La couche fonctionnelle est de préférence choisie parmi :

- une couche fonctionnelle métallique à base d'argent ou d'un alliage métallique contenant de l'argent,
- une couche fonctionnelle métallique à base de niobium,
- une couche fonctionnelle à base de nitrure de niobium.

Les couches fonctionnelles sont de préférence des couches fonctionnelles métalliques à base d'argent.

Une couche fonctionnelle métallique à base d'argent comprend au moins 95,0 %, de préférence au moins 96,5 % et mieux au moins 98,0 % en masse d'argent par rapport à la masse de la couche fonctionnelle. De préférence, la couche métallique fonctionnelle à base d'argent comprend moins de 1,0 % en masse de métaux autres que de l'argent par rapport à la masse de la couche métallique fonctionnelle à base d'argent.

L'épaisseur des couches fonctionnelles à base d'argent est par ordre de préférence croissant comprise de 5 à 20 nm, de 8 à 15 nm.

De préférence, l'empilement comprend au moins une couche fonctionnelle, au moins deux revêtements à base de matériaux diélectriques, chaque revêtement comportant au moins une couche diélectrique, de manière à ce que chaque couche métallique fonctionnelle soit disposée entre deux revêtements à base de matériaux diélectriques.

Les couches diélectriques des revêtements à base de matériaux diélectriques présentent les caractéristiques suivantes seules ou en combinaison :

- elles sont déposées par pulvérisation cathodique assistée par champ magnétique,
- elles sont choisies parmi les couches diélectriques à fonction barrière,
- elles sont choisies parmi les oxydes ou nitrures d'un ou plusieurs éléments choisi(s) parmi le titane, le silicium, l'aluminium, l'étain et le zinc,
- elles ont une épaisseur supérieure à 5 nm, de préférence comprise entre 8 et 35 nm.

On entend par couches diélectriques à fonction barrière, une couche en un matériau apte à faire barrière à la diffusion de l'oxygène et de l'eau à haute température, provenant de l'atmosphère ambiante ou du substrat transparent, vers la couche fonctionnelle. Les couches diélectriques à fonction barrière peuvent être à base de composés de silicium choisis parmi les oxydes tels que $SiO_2$, les nitrures de silicium $Si_3N_4$ et les oxynitures $SiO_xN_y$, éventuellement dopé à l'aide d'au moins un autre élément, comme l'aluminium, à base de nitrures d'aluminium AlN ou à base d'oxyde de zinc et d'étain.

Selon un mode de réalisation avantageux, l'empilement comprend une couche diélectrique à base de nitrure de silicium et/ou d'aluminium située au-dessus d'au moins une partie de la couche fonctionnelle et en-dessous de la couche de protection supérieure. La couche diélectrique à base de nitrure de silicium et/ou d'aluminium a une épaisseur :

- inférieure ou égale à 100 nm, inférieure ou égale à 50 nm ou inférieure ou égale à 40 nm, et/ou
- supérieure ou égale à 15 nm, supérieure ou égale à 20 nm ou supérieure ou égale à 25 nm.

La couche diélectrique à base de nitrure de silicium et/ou d'aluminium est de préférence au-contact de la couche de protection supérieure.

La couche de protection supérieure est de préférence la dernière couche de l'empilement, c'est-à-dire la couche la plus éloignée du substrat revêtu de l'empilement.

Les empilements peuvent comprendre en outre des couches de blocage dont la fonction est de protéger les couches fonctionnelles en évitant une éventuelle dégradation liée au dépôt d'un revêtement à base de matériaux diélectriques ou liée à un traitement thermique. Selon un mode de réalisation, l'empilement comprend au moins une couche de blocage située en-dessous et au-contact d'une couche métallique fonctionnelle à base d'argent et/ou au moins une couche de blocage située au-dessus et au-contact d'une couche métallique fonctionnelle à base d'argent.

Parmi les couches de blocage traditionnellement utilisées notamment lorsque la couche fonctionnelle est une couche métallique à base d'argent, on peut citer les couches de blocage à base d'un métal choisi parmi le niobium Nb, le tantale Ta, le titane Ti, le chrome Cr ou le nickel Ni ou à base d'un alliage obtenu à partir d'au moins deux de ces métaux, notamment d'un alliage de nickel et de chrome (NiCr). L'épaisseur de chaque couche de blocage est de préférence :

- d'au moins 0,5 nm ou d'au moins 0,8 nm et/ou
- d'au plus 5,0 nm ou d'au plus 2,0 nm.

Un exemple d'empilement convenant selon l'invention comprend :

- un revêtement à base de matériaux diélectriques situé en-dessous d'une couche métallique fonctionnelle à base d'argent, le revêtement pouvant comprendre au moins une couche à base de nitrure de silicium et/ou d'aluminium et une couche à base d'oxyde de zinc,
- éventuellement une couche de blocage,
- une couche métallique fonctionnelle à base d'argent,
- éventuellement une couche de blocage,
- un revêtement à base de matériaux diélectriques situé au-dessus de la couche métallique fonctionnelle à base d'argent, le revêtement pouvant comprendre une couche à base de nitrure de silicium et/ou d'aluminium,
- une couche de protection supérieure.

Les substrats transparents selon l'invention sont de préférence en un matériau rigide minéral, comme en verre, notamment silico-sodo-calcique ou organiques à base de polymères (en polymère).

Les substrats transparents organiques selon l'invention peuvent également être en polymère, rigides ou flexibles. Des exemples de polymères convenant selon l'invention comprennent, notamment :

- les polyesters tels que le polyéthylène téréphtalate (PET), le polybutylène téréphtalate (PBT), le polyéthylène naphtalate (PEN) ;
- les polyacrylates tels que le polyméthacrylate de méthyle (PMMA) ;
- les polycarbonates ;
- les polyuréthanes ;
- les polyamides ;
- les polyimides ;
- les polymères fluorés comme les fluoroesters tels que l'éthylène tétrafluoroéthylène (ETFE), le polyfluorure de vinylidène (PVDF), le polychlorotrifluorethylène (PCTFE), l'éthylène de chlorotrifluorethylène (ECTFE), les copolymères éthylène-propylène fluores (FEP) ;

- les résines photoréticulables et/ou photopolymérisables, telles que les résines thiolène, polyuréthane, uréthane-acrylate, polyester-acrylate et
- les polythiouréthanes.

L'épaisseur du substrat varie généralement entre 0,5 mm et 19 mm. L'épaisseur du substrat est de préférence inférieure ou égale à 6 mm, voire 4 mm.

Le matériau selon l'invention, peut ne pas être traité thermiquement, mails il peut être destiné à subir un traitement thermique à température élevée choisi parmi un recuit, par exemple par un recuit flash tel qu'un recuit laser ou flammage, une trempe et/ou un bombage. La mise en oeuvre ou non d'un traitement thermique sur le matériau selon l'invention dépendra de l'application à laquelle ledit matériau est destiné. Les propriétés du matériau selon l'invention, démontrées ici, à savoir la résistance aux rayures, sont indépendantes d'un quelconque traitement thermique.

Le substrat revêtu de l'empilement peut être un verre bombé ou non bombé et/ou trempé ou non trempé. On dit qu'il est trempable et/ou bombable.

Le matériau peut être sous forme de vitrage monolithique, de vitrage feuilleté ou d'un vitrage multiple notamment un double-vitrage ou un triple vitrage.

L'invention concerne également un procédé de préparation d'un matériau comprenant un substrat transparent revêtu d'un empilement agissant sur le rayonnement infrarouge selon lequel on dépose par pulvérisation cathodique assistée par champ magnétique en partant du substrat transparent :

- au moins une couche fonctionnelle et
- au moins une couche de protection supérieure déposée au-dessus d'au moins une partie de la couche fonctionnelle,

caractérisé en ce que la couche de protection supérieure est une couche de carbone hydrogéné obtenue par pulvérisation d'une cible de carbone, de préférence de graphite, dans une atmosphère réactive comprend un hydrocarbure.

L'atmosphère réactive peut comprendre un hydrocarbure choisi parmi le méthane et l'acétylène. L'atmosphère réactive peut comprendre de l'argon.

Selon des modes de réalisation de l'invention, l'atmosphère comprend au moins 5 % ou au moins 10 % en volume de méthane par rapport au volume d'argon.

Selon des modes de réalisation de l'invention, l'atmosphère comprend au plus 25 % ou au plus 20 % en volume de méthane par rapport au volume d'argon.

Enfin, l'invention concerne l'utilisation d'un matériau tel que décrit précédemment pour fabriquer un vitrage. Il peut s'agir par exemple d'un vitrage de bâtiment ou de véhicule.

## Exemples

Des empilements de couches minces définis ci-après sont déposés sur des substrats en verre sodo-calcique clair d'une épaisseur de 4 mm.

Pour ces exemples, les conditions de dépôt des couches déposées par pulvérisation (pulvérisation dite « cathodique magnétron ») sont résumées dans le tableau 1 ci-dessous.

| Tableau 1 | Cibles employées | Pression dépôt | Gaz | Indice* |
|---|---|---|---|---|
| $Si_3N_4$ | Si:Al (92:8 % en pds) | $8*10^{-3}$ mbar | Ar 47 % - $N_2$ 53 % | 2,00 |
| AZO | Zn:Al (2% en pds) | $1.5*10^{-3}$ mbar | Ar 91% - $O_2$ 9% | 1,90 |
| Ag | Ag | $8*10^{-3}$ mbar | Ar à 100 % | - |
| NiCr | Ni : Cr (80 : 20% at.) | $2*10^{-3}$ mbar | Ar à 100 % | - |
| $TiO_2$ | TiOx | $1,5*10^{-3}$ mbar | Ar 88 % - $O_2$ 12 % | 2,32 |
| C | Graphite | $1,5*10^{-3}$ mbar | Ar 100 % | 2.25 |
| C:H 5 % | Graphite | $1,5*10^{-3}$ mbar | Ar 95 % - $CH_4$ 5% | 1,70 |
| C:H 10 % | Graphite | $1,5*10^{-3}$ mbar | Ar 90 % - $CH_4$ 10% | 1,70 |
| at. : atomique ; pds : poids ; * : à 550 nm. | | | | |

Les couches de carbone non hydrogéné notées « C » sont obtenues sans injection de méthane dans l'atmosphère d'argon lors du dépôt de ladite couche.

Les couches de carbone hydrogéné notées « C:H X% » sont obtenues avec injection de méthane dans l'atmosphère d'argon lors du dépôt de ladite couche. X représente le pourcentage volumique de méthane ajouté à l'Argon. Les pourcentages étudiés sont de 5 % et 10 % en volume par rapport au volume d'argon.

## I. Détermination des quantités d'hydrogène dans les couches de protection

La teneur en hydrogène de couches de carbone hydrogéné déposées sur une sous-couche de $Si_3N_4$, a été déterminée par la technique ERDA (« Elastic Recoil Détection Analysis »). Ces analyses permettent de déterminer la quantité d'hydrogène présent dans les couches. Les concentrations correspondent au nombre d'atomes par $cm^2$ de surface analysée.

La valeur donnée pour l'hydrogène, Nbr d'H, mesurée par ERDA correspond pour ces essais au nombre total d'atomes d'hydrogène présents dans un volume constitué par un $cm^2$ d'une couche de protection d'environ 100 nm d'épaisseur.

La valeur donnée pour la concentration de (C+H), Nbr de (C+H), correspond au nombre total d'atomes d'hydrogène et de carbone présents dans un volume constitué par un $cm^2$ d'une couche de protection d'environ 100 nm d'épaisseur. Cette valeur est estimée à partir de la densité théorique du carbone de 2,25 $g/cm^3$ et par quantification des spectres d'ERDA grâce à des simulations.

Enfin, pour s'affranchir de l'épaisseur de la couche de protection déposée, le rapport du nombre total d'atomes d'hydrogène par $cm^2$ de surface analysée mesuré par ERDA sur l'épaisseur de la couche est calculé et correspond au rapport H/Epaisseur avec l'épaisseur choisie en nm.

| Couche de protection | Epaisseur nm | Concentration | | H/(C + H) | Rapport H/Epaisseur |
|---|---|---|---|---|---|
| | | Nbr d'H* | Nbr de (C+H) | | |
| C = non hydrogéné | 100 | $90 \pm 5 \times 10^{15}$ | $1000 \times 10^{15}$ | 9 % | $0,9 \times 10^{15}$ |
| C:H 5% = hydrogéné 5 % | 110 | $297 \pm 15 \times 10^{15}$ | $1100 \times 10^{15}$ | 27 % | $2,7 \times 10^{15}$ |
| C:H 10% = hydrogéné 10 % | 125 | $425 \pm 20 \times 10^{15}$ | $1250 \times 10^{15}$ | 34 % | $3,4 \times 10^{15}$ |

## II. Propriétés optiques et mécaniques

Le tableau ci-dessous liste les matériaux et les épaisseurs physiques en nanomètres (sauf autres indications) de chaque couche qui constitue l'empilement sans couche de protection en fonction de leurs positions vis-à-vis du substrat porteur de l'empilement.

| Empilement sans couche de protection | | Epaisseurs |
|---|---|---|
| Revêtement à base de matériaux diélectriques | $Si_3N_4$ | 30 |
| | AZO | 5 |
| Couche blocage OB | NiCr | 0,5 |
| Couche fonctionnelle | Ag | 10 |
| Revêtement à base de matériaux diélectriques | AZO | 5 |
| | $Si_3N_4$ | 30 |
| **Substrat (mm)** | verre | 4 |

Les matériaux comprenant les couches de protection définies ci-dessous ont été testés. Ce tableau précise les épaisseurs physiques en nanomètres.

| Matériau | Cp.1 | Cp.2 | Cp.3 | In. 1 | In.2 | In.3 | In.4 | In.5 | In.6 |
|---|---|---|---|---|---|---|---|---|---|
| Couches de protection<br>-C<br>- C:H 5% | 1<br>- | 1<br>- | 10<br>- | -<br>1 | -<br>- | -<br>1 | -<br>- | -<br>10 | -<br>- |

(suite)

| Matériau | Cp.1 | Cp.2 | Cp.3 | In. 1 | In.2 | In.3 | In.4 | In.5 | In.6 |
|---|---|---|---|---|---|---|---|---|---|
| - C:H 10% | - | - | - | - | 1 | - | 1 | - | 10 |
| - TiOx | 2 | - | - | 2 | 2 | - | - | - | - |
| Empilement sans couche de protection | | | | | | | | | |
| Substrat | | | | | | | | | |

Pour chacun de ces matériaux, l'absorption lumineuse dans le visible a été mesurée selon l'illuminant D65 à 10° Observateur. Enfin, tous ont été soumis au test de rayure Erichsen (EST) qui consiste à appliquer une force sur l'échantillon, en Newton, à l'aide d'une pointe (pointe de Van Laar, bille d'acier). En fonction de la résistance à la rayure de l'empilement, différents types de rayures peuvent être obtenus : continues, discontinues, larges, étroites, etc.

Le score EST s'échelonne de 0 à 1 : 0 étant le meilleur, 1 le moins bon. Ce score a été calculé à partir de la largeur de rayure EST à 0,7 N, mesurée en 3 points distincts à l'aide d'un microscope optique. La formule de calcul de ce score S est la suivante :

$$S = \frac{L - L_{min}}{L_{max} - L_{min}}$$

L est la largeur moyenne de rayure de l'échantillon considéré, Lmin celle de l'échantillon donnant la largeur de rayure la plus petite, et Lmax la plus grande.

| Matériau | Cp.1 | Cp.2 | Cp.3 | In. 1 | In.2 | In.3 | In.4 | In.5 | In.6 |
|---|---|---|---|---|---|---|---|---|---|
| Absorption % | 7-8 | 7-8 | 22-23 | 7-8 | 7-8 | 7-8 | 7-8 | 7-8 | 7-8 |
| Largeur de rayure 0,7 N | 1,2 | 1 | 0,5 | 0,8 | 1,2 | 1,2 | 0,5 | 0,2 | 0,1 |
| Score Est | 1,00 | 0,82 | 0,36 | 0,64 | 1,00 | 1,00 | 0,36 | 0,09 | 0,00 |

L'absorption des couches de carbone hydrogéné est très réduite par rapport à l'absorption de couches de carbone non hydrogéné. Les couches de carbone hydrogéné selon l'invention, peu importe leur épaisseur (In.1 à In.6), présentent une absorption égale à celle obtenue avec des couches de protection classiquement utilisées à base de carbone de 1 nm (Cp.1, Cp2).

Ces couches de carbone hydrogéné peuvent donc être utilisées comme couches de protection épaisses sans modifier les propriétés optiques du matériau telles que l'absorption et produire une amélioration significative de la résistance aux rayures.

Lorsque la couche de protection est une fine couche à base de carbone, on obtient une résistance aux rayures qui se traduit par des scores EST supérieurs à 0,5 : couche de carbone non hydrogéné de 1 nm (Cp.1, Cp.2), couche de carbone hydrogéné de 1 nm (In.1, In.2, In.3).

Lorsque la couche de protection est une couche de carbone épaisse, la résistance aux rayures est améliorée ce qui se traduit par des scores EST plus bas et notamment inférieurs ou de l'ordre de 0,5 (Cp.3, In.5 et In.6).

L'utilisation en couche épaisse, notamment de l'ordre de 10 nm, permet d'améliorer de manière considérable la résistance aux rayures. On constate que du point de vue de la résistance aux rayures, les résultats obtenus pour les matériaux de l'invention comprenant une couche de 10 nm de carbone hydrogéné (In.5 = 0,2 ; In.6 = 0,1) sont bien meilleurs que ceux obtenus pour une couche de carbone non hydrogéné épaisse (Cp.3 = 0,5). Cela montre qu'il existe une synergie liée à l'utilisation d'une couche de carbone épaisse et d'une couche de carbone hydrogéné conduisant à l'obtention d'une excellente résistance aux rayures.

Enfin, on constate que les couches de carbone hydrogéné comprenant des proportions élevées d'hydrogène présentent une meilleure résistance aux rayures peu importe leur épaisseur (In.5 et In.6).

**Revendications**

1. Matériau comprenant un substrat transparent revêtu d'un empilement agissant sur le rayonnement infrarouge comprenant :

- au moins une couche fonctionnelle et
- au moins une couche de protection supérieure déposée au-dessus d'au moins une partie de la couche fonctionnelle,

**caractérisé en ce que** la couche de protection supérieure est une couche de carbone hydrogéné (i) au sein de laquelle les atomes de carbone forment des liaisons carbone-carbone et carbone-hydrogène et sont essentiellement dans un état d'hybridation sp2 et (ii) qui comprend au moins 10 % d'atomes d'hydrogène par rapport au nombre total d'atomes de carbone et d'hydrogène.

2. Matériau selon la revendication 1, **caractérisé en ce qu'**il peut être destiné à subir un traitement thermique.

3. Matériau selon la revendication 1, **caractérisé en ce qu'**il est non trempé.

4. Matériau selon la revendication 1, **caractérisé en ce qu'**il est trempé.

5. Matériau selon la revendication 1 ou 2, **caractérisé en ce qu'**il est trempable et/ou bombable.

6. Matériau selon l'une des revendications précédentes, **caractérisé en ce que** la couche de protection supérieure a une épaisseur supérieure ou égale à 5 nm.

7. Matériau selon l'une des revendications précédentes, **caractérisé en ce que** la couche de protection supérieure a une épaisseur supérieure à 10 nm.

8. Matériau selon l'une quelconque des revendications précédentes **caractérisé en ce que** la couche de carbone hydrogéné comprend au moins 20 % d'atomes d'hydrogène par rapport au nombre total d'atomes de carbone et d'hydrogène.

9. Matériau selon l'une quelconque des revendications précédentes **caractérisé en ce que** la couche de carbone hydrogéné comprend au moins 25 % d'atomes d'hydrogène par rapport au nombre total d'atomes de carbone et d'hydrogène.

10. Matériau selon l'une des revendications 1 à 5, **caractérisé en ce que** la couche de carbone hydrogéné a une épaisseur d'au moins 1 nm et comprend au moins 34 % d'atomes d'hydrogène par rapport au nombre total d'atomes de carbone et d'hydrogène.

11. Matériau selon l'une des revendications 1 à 5, **caractérisé en ce que** la couche de carbone hydrogéné a une épaisseur supérieure ou égale à 10 nm et comprend au moins 27 % d'atomes d'hydrogène par rapport au nombre total d'atomes de carbone et d'hydrogène.

12. Matériau selon l'une quelconque des revendications précédentes **caractérisé en ce que** la variation de l'absorption lumineuse dans le visible induite par la couche de protection supérieure est inférieure à 10 %, de préférence inférieure à 5 % et mieux inférieure à 2 %.

13. Matériau selon l'une quelconque des revendications précédentes **caractérisé en ce que** la couche fonctionnelle est choisie parmi :

- une couche fonctionnelle métallique à base d'argent ou d'un alliage métallique contenant de l'argent,
- une couche fonctionnelle métallique à base de niobium,
- une couche fonctionnelle à base de nitrure de niobium.

14. Matériau selon l'une quelconque des revendications précédentes **caractérisé en ce que** l'empilement comprend au moins une couche fonctionnelle, au moins deux revêtements à base de matériaux diélectriques, chaque revêtement comportant au moins une couche diélectrique, de manière à ce que chaque couche métallique fonctionnelle soit disposée entre deux revêtements à base de matériaux diélectriques.

15. Matériau selon l'une quelconque des revendications précédentes, **caractérisé en ce que** l'empilement comprend une couche diélectrique à base de nitrure de silicium et/ou d'aluminium située au-dessus d'au moins une partie de la couche fonctionnelle et en-dessous de la couche de protection supérieure.

**16.** Matériau selon l'une quelconque des revendications précédentes tel que le substrat est :

- en verre, notamment silico-sodo-calcique ou
- en polymère notamment en polyéthylène, en polyéthylène téréphtalate ou en polyéthylène naphtalate.

**17.** Procédé de préparation d'un matériau comprenant un substrat transparent revêtu d'un empilement agissant sur le rayonnement infrarouge selon lequel on dépose par pulvérisation cathodique assistée par champ magnétique en partant du substrat transparent :

- au moins une couche fonctionnelle et
- au moins une couche de protection supérieure déposée au-dessus d'au moins une partie de la couche fonctionnelle,

**caractérisé en ce que** la couche de protection supérieure est une couche de carbone hydrogéné obtenue par pulvérisation d'une cible de carbone, de préférence de graphite, dans une atmosphère réactive comprend un hydrocarbure.

**18.** Procédé de préparation d'un matériau selon la revendication 17 **caractérisé en ce que** l'atmosphère réactive comprend un hydrocarbure choisi parmi le méthane et l'acétylène.

**19.** Procédé de préparation d'un matériau selon la revendication 17 ou 18 **caractérisé en ce que** l'atmosphère réactive comprend de l'argon.

**20.** Procédé de préparation d'un matériau selon la revendication 18 et 19, **caractérisé en ce que** l'atmosphère comprend au moins 5 % en volume de méthane par rapport au volume d'argon.

**21.** Procédé de préparation d'un matériau selon la revendication 18 et 19 **caractérisé en ce que** l'atmosphère comprend au moins 10 % en volume de méthane par rapport au volume d'argon.

**22.** Utilisation d'un matériau, selon l'une des revendications 1 à 16, pour fabriquer un vitrage.


**Patentansprüche**

**1.** Material, umfassend ein transparentes Substrat, welches mit einem Schichtsystem beschichtet ist, das auf Infrarotstrahlung einwirkt, umfassend:

- mindestens eine Funktionsschicht und
- mindestens eine obere Schutzschicht, die über mindestens einem Teil der Funktionsschicht aufgebracht ist,

**dadurch gekennzeichnet, dass** die obere Schutzschicht eine Schicht aus hydriertem Kohlenstoff ist, (i) in der die Kohlenstoffatome Kohlenstoff-Kohlenstoff- und Kohlenstoff-Wasserstoff-Bindungen bilden und im Wesentlichen in einem sp2-Hybridisierungszustand vorliegen und (ii) die mindestens 10 % Wasserstoffatome bezogen auf die Gesamtzahl der Kohlenstoff- und Wasserstoffatome umfasst.

**2.** Material nach Anspruch 1, **dadurch gekennzeichnet, dass** es dazu bestimmt sein kann, einer Wärmebehandlung unterzogen zu werden.

**3.** Material nach Anspruch 1, **dadurch gekennzeichnet, dass** es nicht gehärtet wird.

**4.** Material nach Anspruch 1, **dadurch gekennzeichnet, dass** es gehärtet wird.

**5.** Material nach Anspruch 1 oder 2, **dadurch gekennzeichnet, dass** es härtbar und/oder biegbar ist.

**6.** Material nach einem der vorhergehenden Ansprüche, **dadurch gekennzeichnet, dass** die obere Schutzschicht eine Dicke von 5 nm oder mehr aufweist.

**7.** Material nach einem der vorhergehenden Ansprüche, **dadurch gekennzeichnet, dass** die obere Schutzschicht eine Dicke von mehr als 10 nm aufweist.

8.  Material nach einem der vorhergehenden Ansprüche, **dadurch gekennzeichnet, dass** die Schicht aus hydriertem Kohlenstoff mindestens 20 % Wasserstoffatome bezogen auf die Gesamtzahl der Kohlenstoff- und Wasserstoffatome umfasst.

9.  Material nach einem der vorhergehenden Ansprüche, **dadurch gekennzeichnet, dass** die Schicht aus hydriertem Kohlenstoff mindestens 25 % Wasserstoffatome bezogen auf die Gesamtzahl der Kohlenstoff- und Wasserstoffatome umfasst.

10. Material nach einem der Ansprüche 1 bis 5, **dadurch gekennzeichnet, dass** die Schicht aus hydriertem Kohlenstoff eine Dicke von mindestens 1 nm aufweist und mindestens 34 % Wasserstoffatome bezogen auf die Gesamtzahl der Kohlenstoff- und Wasserstoffatome umfasst.

11. Material nach einem der Ansprüche 1 bis 5, **dadurch gekennzeichnet, dass** die Schicht aus hydriertem Kohlenstoff eine Dicke von 10 nm oder mehr aufweist und mindestens 27 % Wasserstoffatome bezogen auf die Gesamtzahl der Kohlenstoff- und Wasserstoffatome umfasst.

12. Material nach einem der vorhergehenden Ansprüche, **dadurch gekennzeichnet, dass** die Änderung der Lichtabsorption im sichtbaren Bereich, die durch die obere Schutzschicht bewirkt wird, weniger als 10 %, bevorzugt weniger als 5 % und mehr bevorzugt weniger als 2 % beträgt.

13. Material nach einem der vorhergehenden Ansprüche, **dadurch gekennzeichnet, dass** die Funktionsschicht ausgewählt ist aus:

    - einer metallischen Funktionsschicht auf der Basis von Silber oder einer silberhaltigen Metalllegierung,
    - einer metallischen Funktionsschicht auf der Basis von Niob,
    - einer Funktionsschicht auf der Basis von Niobnitrid.

14. Material nach einem der vorhergehenden Ansprüche, **dadurch gekennzeichnet, dass** das Schichtsystem mindestens eine Funktionsschicht, mindestens zwei Beschichtungen auf der Basis von dielektrischen Materialien umfasst, wobei jede Beschichtung mindestens eine dielektrische Schicht umfasst, sodass jede metallische Funktionsschicht zwischen zwei Beschichtungen auf der Basis von dielektrischen Materialien angeordnet ist.

15. Material nach einem der vorhergehenden Ansprüche, **dadurch gekennzeichnet, dass** das Schichtsystem eine dielektrische Schicht auf der Basis von Silicium- oder Aluminiumnitrid umfasst, die sich über mindestens einem Teil der Funktionsschicht und unter der oberen Schutzschicht befindet.

16. Material nach einem der vorhergehenden Ansprüche, wobei das Substrat besteht:

    - aus Glas, insbesondere Kalk-Natron-Silikatglas, oder
    - aus Polymer, insbesondere aus Polyethylen, aus Polyethylenterephthalat oder aus Polyethylennaphthalat.

17. Verfahren zur Herstellung eines Materials, umfassend ein transparentes Substrat, welches mit einem Schichtsystem beschichtet ist, das auf Infrarotstrahlung einwirkt, bei dem durch magnetfeldgestützte Kathodenzerstäubung ausgehend von dem transparenten Substrat Folgendes aufgebracht wird:

    - mindestens eine Funktionsschicht und
    - mindestens eine obere Schutzschicht, die über mindestens einem Teil der Funktionsschicht aufgebracht wird,

    **dadurch gekennzeichnet, dass** die obere Schutzschicht eine Schicht aus hydriertem Wasserstoff ist, die durch Zerstäuben eines Targets aus Kohlenstoff, bevorzugt aus Graphit, in einer reaktiven Atmosphäre, einen Kohlenwasserstoff umfasst, erhalten wird.

18. Verfahren zur Herstellung eines Materials nach Anspruch 17, **dadurch gekennzeichnet, dass** die reaktive Atmosphäre einen Kohlenwasserstoff umfasst, der aus Methan und Acetylen ausgewählt ist.

19. Verfahren zur Herstellung eines Materials nach Anspruch 17 oder 18, **dadurch gekennzeichnet, dass** die reaktive Atmosphäre Argon umfasst.

20. Verfahren zur Herstellung eines Materials nach Anspruch 18 und 19, **dadurch gekennzeichnet, dass** die Atmosphäre mindestens 5 Vol.-% Methan bezogen auf das Argonvolumen umfasst.

21. Verfahren zur Herstellung eines Materials nach Anspruch 18 und 19, **dadurch gekennzeichnet, dass** die Atmosphäre mindestens 10 Vol.-% Methan bezogen auf das Argonvolumen umfasst.

22. Verwendung eines Materials nach einem der Ansprüche 1 bis 16 zum Fertigen einer Verglasung.


**Claims**

1. A material comprising a transparent substrate coated with a stack acting on infrared radiation comprising:

   - at least one functional layer and
   - at least one upper protective layer deposited above at least a part of the functional layer, **characterized in that** the upper protective layer is a hydrogenated carbon layer, (i) within which layer the carbon atoms form carbon-carbon and carbon-hydrogen bonds and are essentially in an sp$^2$ hybridization state and (ii) which comprises at least 10% of hydrogen atoms with respect to the total number of carbon and hydrogen atoms.

2. The material as claimed in claim 1, **characterized in that** it may be intended to undergo a heat treatment.

3. The material as claimed in claim 1, **characterized in that** it is untempered.

4. The material as claimed in claim 1, **characterized in that** it is tempered.

5. The material as claimed in claim 1 or 2, **characterized in that** it can be tempered and/or bent.

6. The material as claimed in one of the preceding claims, **characterized in that** the upper protective layer has a thickness of greater than or equal to 5 nm.

7. The material as claimed in one of the preceding claims, **characterized in that** the upper protective layer has a thickness of greater than 10 nm.

8. The material as claimed in any one of the preceding claims, **characterized in that** the hydrogenated carbon layer comprises at least 20% of hydrogen atoms, with respect to the total number of carbon and hydrogen atoms.

9. The material as claimed in any one of the preceding claims, **characterized in that** the hydrogenated carbon layer comprises at least 25% of hydrogen atoms, with respect to the total number of carbon and hydrogen atoms.

10. The material as claimed in one of claims 1 to 5, **characterized in that** the hydrogenated carbon layer has a thickness of at least 1 nm and comprises at least 34% of hydrogen atoms with respect to the total number of carbon and hydrogen atoms.

11. The material as claimed in one of claims 1 to 5, **characterized in that** the hydrogenated carbon layer has a thickness of greater than or equal to 10 nm and comprises at least 27% of hydrogen atoms with respect to the total number of carbon and hydrogen atoms.

12. The material as claimed in any one of the preceding claims, **characterized in that** the variation in the light absorption in the visible region brought about by the upper protective layer is less than 10%, preferably less than 5% and better still less than 2%.

13. The material as claimed in any one of the preceding claims, **characterized in that** the functional layer is chosen from:

   - a functional metal layer based on silver or on a silver-containing metal alloy,
   - a functional metal layer based on niobium,
   - a functional layer based on niobium nitride.

14. The material as claimed in any one of the preceding claims, **characterized in that** the stack comprises at least one functional layer and at least two coatings based on dielectric materials, each coating comprising at least one dielectric layer, so that each functional metal layer is positioned between two coatings based on dielectric materials.

15. The material as claimed in any one of the preceding claims, **characterized in that** the stack comprises a dielectric layer based on silicon and/or aluminum nitride located above at least a part of the functional layer and below the upper protective layer.

16. The material as claimed in any one of the preceding claims, such that the substrate is:

  - made of glass, in particular soda-lime-silica glass, or
  - made of polymer, in particular made of polyethylene, of polyethylene terephthalate or of polyethylene naphthalate.

17. A process for the preparation of a material comprising a transparent substrate coated with a stack acting on infrared radiation according to which there is deposited, by magnetic-field-assisted cathode sputtering, starting from the transparent substrate:

  - at least one functional layer and
  - at least one upper protective layer deposited above at least a part of the functional layer, **characterized in that** the upper protective layer is a hydrogenated carbon layer obtained by sputtering a carbon target, preferably a graphite target, in a reactive atmosphere comprising a hydrocarbon.

18. The process for the preparation of a material as claimed in claim 17, **characterized in that** the reactive atmosphere comprises a hydrocarbon chosen from methane and acetylene.

19. The process for the preparation of a material as claimed in claim 17 or 18, **characterized in that** the reactive atmosphere comprises argon.

20. The process for the preparation of a material as claimed in claim 18 and 19, **characterized in that** the atmosphere comprises at least 5% by volume of methane with respect to the volume of argon.

21. The process for the preparation of a material as claimed in claim 18 and 19, **characterized in that** the atmosphere comprises at least 10% by volume of methane with respect to the volume of argon.

22. The use of a material as claimed in one of claims 1 to 16 for manufacturing a glazing.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030143401 A